Europäisches Patentamt

European Patent Office

Office européen des brevets

(11) Veröffentlichungsnummer: **0 191 125**
A1

# (12) EUROPÄISCHE PATENTANMELDUNG

(21) Anmeldenummer: 85101620.4

(22) Anmeldetag: 14.02.85

(51) Int. Cl.⁴: **C 04 B 35/00, C 04 B 35/64**

(43) Veröffentlichungstag der Anmeldung: 20.08.86
Patentblatt 86/34

(84) Benannte Vertragsstaaten: **DE FR GB SE**

(71) Anmelder: **Hutschenreuther AG, D-8672 Selb (DE)**

(72) Erfinder: **Müller-Zell, Axel, Dr., Plössberger Weg 36, D-8672 Selb (DE)**
Erfinder: **Thomas, Rainer, Dipl. Min., Mühlstrasse 26, D-8672 Selb (DE)**

(74) Vertreter: **Patentanwälte Czowalla . Matschkur + Partner, Dr.-Kurt-Schumacher-Strasse 23 Postfach 9109, D-8500 Nürnberg 11 (DE)**

(54) Verfahren zum Herstellen von Gemischen aus pulverförmigen keramischen Rohsstoffen.

(57) Die Erfindung bezieht sich auf ein Verfahren zum Herstellen von Gemischen aus pulverförmigen keramischen Rohstoffen, anorganischen und/oder organischen Dotiermitteln, organischen Bindemitteln und einem Lösungsmittel oder Lösungsmittelgemisch, in welchem die Dotier- und Bindemittel löslich sind, indem aus den Gemischbestandteilen eine Suspension gebildet, diese durch schockartiges Gefrieren verfestigt und anschliessend das Lösungsmittel oder Lösungsmittelgemisch durch Sublimation entfernt wird, wobei sich die gelösten Stoffe ohne Entmischung feinst verteilt abscheiden.

## Verfahren zum Herstellen von Gemischen aus pulverförmigen keramischen Rohstoffen

Die Erfindung richtet sich auf ein Verfahren zum Herstellen von Gemischen aus pulverförmigen keramischen Rohstoffen, anorganischen und/oder organischen Dotiermitteln, organischen Bindemitteln und einem Lösungsmittel oder Lösungsmittelgemisch, in welchem die Dotier- und Bindemittel löslich sind.

Aus keramischen Werkstoffen bestehenden Bauteilen liegt praktisch ausnahmslos ein Stoffgemisch zugrunde, das nach einem der klassischen Verfahren eine Formgebung erfahren hat. Neben dem sich größter Verbreitung erfreuenden Schlickergießen kommen das statische oder isostatische Trockenpressen, das Heißpressen, das Heißisostatischpressen, das Extrudieren, das Strangpressen und das Spritzgießen als Formgebungsverfahren in Betracht. Solche keramischen Bauteile haben in jüngster Zeit zunehmend an Bedeutung gewonnen, da bestimmte technologische Anforderungen vielfach nur von keramischen Werkstoffen erfüllt werden können. Der Einsatz solcher keramischen Bauteile ist insbesondere von einer materialspezifischen Kennzeichnung der Festigkeit und des Materialgefüges abhängig. Der Mangel an zuverlässigen Festigkeitseigenschaften bewirkt jedoch eine große Unsicherheit in der Bestimmung der Haltbarkeit keramischer Bauteile. Entscheidend kommt hinzu die Reproduzierbarkeit der Herstellung. Besondere Probleme bereitet es allerdings, einen Werkstoff von größtmöglicher Homogenität zu erzielen, denn nur diese Eigenschaft vermeidet Dichte-Schwankungen über das gesamte Volumen und gewährleistet eine gleichmäßige Verteilung von Hilfsmitteln und Sinteradditiven, eine weitgehende Gleichmäßigkeit des Korns, eine Ausschaltung von Eigenspannungen und herstellungsbedingten Rissen oder Fehlstellen sowie eine gleichbleibend hohe Festigkeit der Bauteile mit entsprechend hohem Weibull-Modul und damit größtmöglicher Lebensdauer. Die Erzielung homogener Mischungen aus pulverförmigen keramischen Rohstoffen und anorganischen und/oder organischen Hilfsmitteln setzen die Anwendung flüssiger Medien, d.h. das Mischen in einer Flüssigkeit unter Bereitung einer Suspension voraus, wobei bevorzugt wird, daß sich die verwendeten Hilfsmittel ganz oder teilweise in den vorgelegten Lösungsmitteln lösen und nach Entfernen der Lösungsmittel in homogener feinster Verteilung vorliegen. Fehlt es an der notwendigen Homogenität, sind beispielsweise bestimmte erforderliche Zusätze, wie Sinteradditive od. dgl. nicht homogen verteilt, kommt es zu Entmischungen. Diese äußern sich in Zonen der Verarmung und solchen der Anreicherung entsprechender Zusätze, was bekanntlich durch einen erhöhten Zusatz solcher Hilfsmittel ausgeglichen wird, um einer Verarmung über ein vorbestimmtes Maß hinaus zu begegnen. Diese Maßnahme ist jedoch im allgemeinen besonders nachteilig. Sie kann u.a. die Rieselfähigkeit beeinträchtigen, die ihrerseits für ein gleichmäßiges Füllen und Ausfüllen auch komplizierter Formen bei der Formgebung von ausschlaggebender Bedeutung ist.

Im allgemeinen geht man bei der Verarbeitung keramischer Gemische von einem Schlicker aus, dem anschließend die Flüssigkeit z.B. durch Filtrieren, Abpressen in Filterpressen, Trocknen durch Stehenlassen bei Raumtemperatur bzw. unter Wärmezufuhr oder Verdampfen des Suspensionsmittels und des Lösungsmittels, insbes. im Trockenschrank oder mittels Sprühtrocknung entzogen wird. Beim Flüssigkeitsentzug werden in der flüssigen Phase gelöste Stoffe aus dem Materialgemisch an die Oberfläche geführt und beim Übergang der Flüssigkeit in die Dampfphase nahe der Oberfläche ausgefällt, so daß sich in diesem Bereich Anreicherungszonen bilden. Diese Entmischungserscheinungen sind gleichbedeutend mit einer Inhomogenität des Werkstücks. So führen Anreicherungen temporärer Bindemittel zu mitunter beträchtlichen Dichteunterschieden oder auch zu einer ungleichen Porenverteilung nach einem Ausbrenn- oder Sintervorgang. Die Folge sind Unterschiede im Festigkeitsniveau und hinsichtlich der Streubreite.

Wird entsprechend dem in der keramischen Industrie am häufigsten eingesetzten Verfahren der Schlicker bei hohen Temperaturen unter Bildung eines Granulats versprüht, weist dieses Verfahren außer dem Nachteil der unvermeidbaren Entmischung selbst bei kurzzeitigem Flüssigkeitsentzug einen hohen Energieverbrauch auf. Dies hat zur Folge, daß die Ausbeute bei nur etwa 70 % liegt und man, um eine Explosionsgefahr zu vermeiden, im allgemeinen wässrige Systeme anwenden muß, die aber als Grundlage für den Schlicker für viele Werkstoffe absolut ungeeignet sind. Nimmt man explosionsgefährdete Lösungsmittel zuhilfe, setzt dies entsprechend explosionsgeschützte Anlagen voraus, die außerordentlich teuer sind. Hinzu kommt in diesem Fall die Umweltbelastung durch weitgehende Verflüchtigung solcher Lösungsmittel.

Neben dem automatischen isostatischen Trockenpressen eignet sich das Spritzgießen besonders als Mittel der Formgebung in der Massenfertigung. Die Vorteile dieses Verfahrens können

- 4 -

0191125

aber nur dann wahrgenommen werden, wenn die unerläßlichen Hilfsmittel, wie Bindemittel, Gleitmittel und Plastifizierungsstoffe weitgehend homogen in der Masse verteilt sind. Deshalb werden diese Gemische in beheizten Bandmischern oder Knetern verarbeitet (z.B. DE-OS 29 31 222). Es hat sich allerdings herausgestellt, daß infolge des anzustrebenden geringstmöglichen Anteils an Gleit- und Plastifizierungsmitteln gegenüber dem Anteil an keramischem Material eine gleichmäßige Verteilung, Benetzung oder gar Umhüllung aller keramischen Teile beim Mischen in beheizten Mischern oder Knetern praktisch unmöglich ist. Dies behindert nicht nur den Spritzgießvorgang selbst, sondern beeinträchtigt auch die Homogenität der hergestellten Werkstücke.

Die Erfindung nimmt sich der sich hieraus ergebenden besonderen Problematik im Hinblick auf die den nach den bekannten Verfahren hergestellten Erzeugnissen anhaftenden Mängel der Homogenität ihres Werkstoffs an. Es ist Aufgabe der Erfindung, bei einem Verfahren der eingangs bezeichneten Art einen Weg zur Erzielung einer größtmöglichen Homogenität der zur Formgebung gelangenden Gemische zu weisen sowie eine gute Verarbeitbarkeit der Gemische und einwandfrei reproduzierbare Ergebnisse zu gewährleisten. Dieses Ziel erreicht die Erfindung in der Weise, daß bei dem eingangs bezeichneten Verfahren aus dem Gemisch eine Suspension gebildet, diese Suspension durch schockartiges Gefrieren verfestigt und anschließend das Lösungsmittel oder Lösungsmittelgemisch durch Sublimation entfernt wird, wobei sich die gelösten Stoffe ohne Entmischung feinst verteilt abscheiden. Das erfindungsgemäße Verfahren ermöglicht die Verwendung nahezu aller einschlägigen Lösungsmittel oder Lösungsmittelgemische zum Anpasten der pulverförmigen keramischen Rohstoffe mit den verschiedenen Zusätzen, die in den Lösungsmitteln ganz oder zumindest teilweise löslich sind. Die Erfindung befreit den Fachmann von dem Zwang, bevorzugt auf Wasser oder technische Alkohole als Dispergiermittel anstelle technologisch vorteilhafterer organischer Lösungen bzw. Lösungsmittel zurückzugreifen, nur weil diese giftig, gesundheitsschädlich, umweltbelastend, brennbar, explosiv oder auch teuer sind. Das erfindungsgemäße Verfahren gestattet es, da die Lösungsmittel durch Sublimation dem Gemisch entzogen werden, in einem abgeschlossenen System zu arbeiten und auf eine Wärmebehandlung zu verzichten, die die Anwendung brennbarer und/oder explosiver Mittel verbietet. Die nahezu vollständige Rückgewinnung des oder der Lösungsmittel enthebt das Verfahren von der Vorrangigkeit des Kostenproblems. Dem Fachmann steht bei der Anwendung des erfindungsgemäßen Verfahrens die Auswahl unter einer Vielzahl sich bietender organischer Lösungsmittel frei, was es ihm wiederum ermöglicht, Bindemittel und Lösungsmittel optimal aufeinander abzustellen.

Das erfindungsgemäße Verfahren eignet sich nicht nur für keramische Rohstoffe im engeren Sinne, es erstreckt sich auch auf keramische Pulvergemische aus ggf. synthetischen Carbiden, Nitriden, Oxiden, vorzugsweise Siliciumcarbid, Siliciumnitrid, Aluminiumoxid, Zirkonoxid oder Aluminiumtitanat. Es bestehen keine Bedenken, das erfindungsgemäße Verfahren auch auf andere keramische Werkstoffe oder Werkstoffgemische auszudehnen.

Aus gefrorenen Stoffen im Wege der Sublimation Flüssigkeit zu entziehen, gehört zum an sich bekannten Stand der Technik. Die Trocknung erfolgt dabei unter Umgehung des flüssigen Aggregatzustandes durch direkte Überführung von der festen in die Dampfform. Da die meisten chemischen Verbindungen hierbei qualitativ und quantitativ unverändert bleiben, genießt die Gefriertrocknung bevorzugte Anwendung für Stoffe biologischen Ursprungs, z.B. Gewebe, Bakterien und Viruskulturen, weiter für Blutplasma, Serumfraktionen, Antikörper, Seren, Impfstoffe und pharmazeutische Produkte im allgemeinen. Man erhält hierbei ein sehr leicht wieder lösliches Produkt, das nach Hinzufügen des Lösungsmittels die

- 6 -                                           0191125

Eigenschaften des Ausgangsgutes in unveränderter Form besitzt.

Es gehört auch das Herstellen von oxidischen, sinteraktiven
keramischen Pulvern durch Fällen oder Kofällen und Gefriertrocknen zum Stand der Technik (z.B. DE-OS 33 10 924). In
diesem Falle handelt es sich aber um ein Zwischenprodukt,
welches erst durch eine Temperaturbehandlung in seine Oxide
umgewandelt wird und wobei das Gefrieren allein eine sinterhemmende Agglomeration zu vermeiden bezweckt. Auf diese Weise werden anorganische keramische Pulver hergestellt, die
gewissermaßen als Rohstoffe in ein weiteres keramisches Verarbeitungsverfahren, beispielsweise ein dem Ausgangspunkt
der Erfindung bildenden Stand der Technik angehörendes Verfahren eingesetzt werden. Die unter Verwendung von auf diese
Weise hergestellten keramischen Rohstoffen durchgeführten
Verfahren unterliegen dann der gleichen Problematik, deren
Lösung die Erfindung sich zum Ziel gesetzt hat.

Der im Rahmen des erfindungsgemäßen Verfahrens angewandte
Schritt des Gefriertrocknens erlaubt es, Gemische aus pulverförmigen keramischen Rohstoffen mit den notwendigen Zusätzen als Ausgangsmaterial zur Herstellung von keramischen
Bauteilen zu gewinnen. Ein solches Pulvergemisch kann ohne
weiteres Zutun jeder beliebigen Formgebung zugeführt und ohne
Schwierigkeiten gesintert werden. Von besonderer Bedeutung
ist in diesem Zusammenhang die Tatsache, daß das Gemisch sowohl als Pulverkuchen, als grobstückiges Material oder als
feinstkörniges Pulver gewinnbar ist, je nachdem, wie es zur
weiteren Verarbeitung benötigt wird.

Es liegt im Rahmen der Erfindung, die Suspension, z.B. den
keramischen Schlicker aus Feststoff und Lösungsmittel, mittels eines Sprühaggregats in Tröpfchen- oder Nebelform in
ein Kältemittel einzusprühen, danach das Kältemittel abzutrennen und das gefrorene rieselfähige Feststoffgemisch der
Sublimation zu unterziehen. Durch das Schockgefrieren gewinnt man ein kugelförmiges Granulat von guter Rieselfähigkeit. Dieses ist ohne weiteres auf die jeweils gewünschte Korngröße einstellbar. Von besonderer Bedeutung ist die ausgezeichnete Verarbeitbarkeit eines solchen Produktes wie seine praktisch vollkommene Homogenität, die ein Entmischen ausschließt. Diese Vorzüge werden durch kein anderes Verfahren erreicht. Die Folge davon ist eine außerordentliche Qualitätssteigerung der aus den in der erfindungsgemäßen Weise hergestellten Gemischen gefertigten Bauteile. So wird nicht nur die Festigkeit erheblich gesteigert, sondern auch der Weibull-Modul deutlich erhöht, der für die Streubreite der Festigkeit und damit für die Lebensdauer eines Bauteils von ausschlaggebender Bedeutung ist. Je höher der Weibull-Modul, umso geringer ist die Ausfallwahrscheinlichkeit. Insbesondere im Hinblick auf automatische Verfahren zur Weiterverarbeitung derartiger Gemische ist die Reproduzierbarkeit von entscheidendem Gewicht.

Bei Anwendung des erfindungsgemäßen Verfahrens läßt sich ein Gemisch gewinnen, das die Erreichung höherer Preßdichten im grünen Zustand zuläßt. Dies ist wiederum die Voraussetzung zur Erzielung höherer Sinterdichten unter zugleich geringerer Schw-indung. Für das Endprodukt, nämlich das aus dem keramischen Werkstoff herzustellende Bauteil, bedeutet dies geringere Toleranzen und/oder den Fortfall einer teuren Nachbearbeitung. Das erfindungsgemäße Verfahren gewinnt schließlich besondere Bedeutung für die Verarbeitung feinster Pulver mit Oberflächen bis beispielsweise 100 m²/g und darüber, die beispielsweise im Plasmabrenner erzeugt werden, wenn es gilt, diese Pulver von Luft oder sauerstoffhaltigen Stoffen vor ihrer Formgebung fernzuhalten.

Die Erfindung wird anhand der folgenden Beispiele näher erläutert:

1. Ein sinterfähiges Siliciumcarbidpulver wird in eine wässrige zucker- und borsäurehaltige Lösung eingebracht. Diese Lösung enthält außerdem 1 - 10 % einer Carboxylmethylcellulose in gelöster Form als Hilfsmittel zum Trockenpressen. Die so gewonnene homogene keramische Suspension wird mittels einer Sprühvorrichtung in feinster Verteilung in flüssigen Stickstoff gesprüht, wo die Nebeltröpfchen schockgefrieren. Der flüssige Stickstoff wird daraufhin von der festen Phase abgetrennt und das kugelige Granulat in einer Schale, beginnend bei -40°C, der Trocknung durch Sublimation unterworfen. Das trockene, rieselfähige Material kann darauf jeder beliebigen Verformung, z.B. einem Trockenpreßverfahren zugeführt werden.

2. Ein magnesiumoxid- und/oder aluminiumoxidhaltiges sinterfähiges Siliciumnitridpulver wird in Heptanol eingebracht, welches 15 % Polyvinylbutyral und 7,5 % Polyäthylenglykol in gelöster Form enthält. Diese Suspension wird bei -50°C schockgefroren und gefriergetrocknet. Der trockene Pulverkuchen ist leich zerkleinert und z.B. als 5-mm-Granulat bevorzugt zum Spritzgießen geeignet.

3. Ein submikronfeines $Al_2O_3$-Pulver wird mit 0,5 % Mg - als Mg-Acetat , gelöst in Wasser - zu einer homogenen Suspension vermischt, diese Suspension wird zwecks Desagglomerierung in einem Attriter behandelt und anschließend mit 1 % eines Polyvinylalkoholbinders versehen und diese Suspension mittels Sprühpistole in flüssiges Freon gesprüht. Das Kältemittel wird mittels Sieb von dem Sprühkorn - mit einem Durchmesser von 400 - 600 µm - abgetrennt und der Gefriertrocknung unterworfen.

Das getrocknete rieselfähige Granulat wird dann einer
Formgebung zugeführt. Der fertige Formkörper wird
30 Minuten bei 1000°C vorgebrannt, wobei das feinstverteilte Dotiermittel Mg-Acetat zu MgO umgewandelt
wird. Abschließend wird bei 1850°C fertiggesintert.

- 1 -

0191125

Patentansprüche

1. Verfahren zum Herstellen von Gemischen aus pulverförmigen keramischen Rohstoffen, anorganischen und/oder organischen Dotiermitteln, organischen Bindemitteln und einem Lösungsmittel oder Lösungsmittelgemisch, in welchem die Dotier- und Bindemittel löslich sind, dadurch gekennzeichnet, daß aus den Gemischbestandteilen eine Suspension gebildet, diese durch schockartiges Gefrieren verfestigt und anschließend das Lösungsmittel oder Lösungsmittelgemisch durch Sublimation entfernt wird, wobei sich die gelösten Stoffe ohne Entmischung feinst verteilt abscheiden.

2. Verfahren nach Anspruch 1, dadurch gekennzeichnet, daß die Suspension in tröpfchen- oder nebelförmiger Feinstverteilung in ein flüssiges Kältemittel gesprüht, danach das Kältemittel abgetrennt und das gefrorene rieselfähige Feststoffgemisch der Sublimation unterworfen wird.

3. Verfahren nach Anspruch 1 oder 2, dadurch gekennzeichnet, daß das Lösungsmittel oder Lösungsmittelgemisch an einer gekühlten Fläche kondensiert und zurückgewonnen wird.

# EUROPÄISCHER RECHERCHENBERICHT

**Europäisches Patentamt**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | CHEMICAL ABSTRACTS, Band 102, Nr. 18, 6. Mai 1985, Seite 280, Nr. 153766d, Columbus, Ohio, US; & JP - A - 59 223 266 (IBIDEN CO. LTD.) 15-12-1984 | 1-3 | C 04 B 35/00 C 04 B 35/64 |
| X | CHEMICAL ABSTRACTS, Band 98, Nr. 14, 4. April 1983, Seite 309, Nrs. 112521a,112522b, Columbus, Ohio, US; & JP - A - 57 145 077 (IBIGAWA ELECTRIC INDUSTRY CO. LTD.) 07-09-1982, & JP - A - 57 145 078 (IBIGAWA ELECTRIC INDUSTRY CO. LTD.) 07-09-1982, & US - A - 4 526 734 / 02-07-1985 | 1-3 | |
| X | CHEMICAL ABSTRACTS, Band 101, Nr. 8, 20. August 1984, Seite 241, Nr. 59137g, Columbus, Ohio, US; & JP - A - 59 26 966 (MITSUBISHI MINING AND CEMENT CO. LTD.) 13-02-1984 | 1-3 | **RECHERCHIERTE SACHGEBIETE (Int. Cl.4)**<br><br>C 04 B |

--- -/-

Der vorliegende Recherchenbericht wurde für alle Patentansprüche erstellt.

| Recherchenort | Abschlußdatum der Recherche | Prüfer |
|---|---|---|
| DEN HAAG | 18-10-1985 | SCHURMANS H.D.R. |

**Europäisches Patentamt**

# EUROPÄISCHER RECHERCHENBERICHT

| | EINSCHLÄGIGE DOKUMENTE | | Seite 2 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | ANNALES DE CHIMIE, Band 7, Nr. 5, Mai 1982, Seiten 377-394, Paris, FR; V.V. PANKOV u.a.: "Elaboration de poudres en vue d'un frittage rapide par la technique mixte de la lyophilisation de l'un des oxydes en suspension dans la solution liquide des autres cations" * Seite 382, Abschnitt 2.3; Seite 387, Abschnitt 4.3.2 * | 1-3 | |
| | ----- | | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 18-10-1985 | SCHURMANS H.D.R. |